# EUROPEAN PATENT APPLICATION

(11) **EP 2 595 102 A1**
(43) Date of publication of application: **22.05.2013**
(21) Application number: 12166254.8
(22) Date of filing: 01.05.2012
(51) Int. Cl.: G06Q 10/10, G06F 1/32

(54) **Electronic device and method for updating a time identifier associated therewith**

(30) Priority: 18.11.2011 US 201113300196
(71) Applicant: Research In Motion Limited, Waterloo, ON N2L 3W8 (CA)
(72) Inventor: Werner, Colin Mark, Waterloo Ontario N2L 3W8 (CA); Vander Veen, Raymond Paul, Waterloo Ontario N2V 2M6 (CA)
(74) Representative: Hibbert, Juliet Jane Grace

(57) **Abstract**

An electronic device that automatically wakes up from a power saving mode at a time that is equal to or earlier than a scheduled calendar event or an alert time. Power saving modes may include power-off-completely, standby and hibernate. The user may be prompted to confirm changes to planned wake up times or alert times. The electronic device includes an input device, an output device, a memory capable of storing an alert, and a processor coupled with the input device, the output device and the memory. The processor is configured to identify a current time, receive a command to switch the electronic device from a first operating mode to a second operating mode, and identify a record in a data-store. The record stores a first time identifier. The processor is further configured to identify a second time identifier. The processor automatically changes the second time identifier to be sooner than or equal to the first time identifier, automatically switches the electronic device from the second operating mode to the first operating mode when the current time matches the second time identifier, and presents the alert via the output device when the current time matches the first time identifier.

## Description

### Field

The present disclosure relates generally to a time identifier associated with an electronic device and more specifically to updating the time identifier.

### Background

Some electronic devices are capable of presenting an alert via an output device. The alert can be presented at a configurable time. Some electronic devices are associated with a data-store capable of storing records, such as calendar events; and the electronic device can be configured to present the records in the data-store at respective times associated with the records.

### Brief Description of the Drawings

Figure 1 is a block diagram of selected components of an electronic device.
Figures 2a-d are schematic diagrams of alerts in the electronic device.
Figures 2e-f are schematic diagrams of the electronic device executing an alarm application.
Figures 3a-d are schematic diagrams of a data-store associated with the electronic device.
Figures 3e-f are schematic diagrams of the electronic device executing a calendar application.
Figures 4a-d are schematic diagrams of the electronic device executing an operating modes selection application.
Figure 4e is a schematic diagram of the electronic device executing an operating modes scheduler application.
Figure 5 is a flowchart of a method for automatically changing a time identifier associated with an alert based on a time identifier associated with a record in the data-store.
Figure 6 is another flowchart of another method for automatically changing a time identifier associated with an alert based on a time identifier associated with a record in the data-store.
Figure 7 is a flowchart of a method for automatically changing an automatic power-on time associated with the electronic device based on a time identifier associated with a record in the data-store.
Figures 8a-c are schematic diagrams of the electronic device executing an operating modes selection application, a prompt and a status screen, respectively.
Figures 9a-c are schematic diagrams of the electronic device executing an operating modes selection application, a prompt and a status screen, respectively.
Figures 10a-b are schematic diagrams of a prompt and a status screen, respectively.
Figures 11a-c are schematic diagrams of the electronic device executing an operating modes selection appl ication, a prompt and a status screen, respectively.
Figures 12a-c are schematic diagrams of the electronic device executing an operating modes selection application, a prompt and a status screen, respectively.
Figure 13 is a block diagram of selected components of an electronic device.

### Detailed Description

According to an aspect of the present disclosure there is provided, an electronic device including an input device, an output device and a memory. The electronic device further includes a processor coupled with the input device, the output device and the memory. The processor is configured to identify a current time; receive a command to switch the electronic device from a first operating mode to a second operating mode; identify a record in a data-store, the record storing a first time identifier; identify a second time identifier; automatically change the second time identifier to be sooner than or equal to the first time identifier; and automatically switch the electronic device from the second operating mode to the first operating mode when the current time matches the second time identifier and present the record via the output device when the current time matches the first time identifier. By utilizing this method, the electronic device consumes less power in the second operating mode than in the first operating mode.

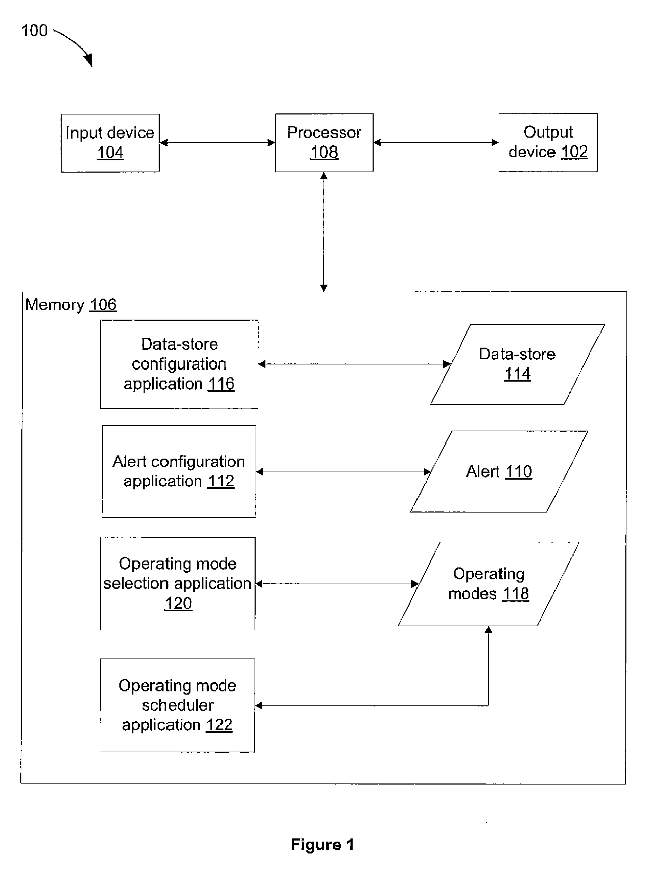

Figure 1 shows an electronic device 100 according to one embodiment. In this example embodiment the electronic device 100 is a mobile electronic communications device or mobile device. In other embodiments, the electronic device 100 can be a desktop computer, a laptop computer, an electronic tablet, or the like. The mobile device 100 includes, among other things, an output device 102, an input device 104, a memory 106 and a processor 108 coupled with the output device 102, the input device 104 and the memory 106.

The output device 102 can include a display. The display can include a liquid crystal display (LCD), organic light-emitting diode (OLED) display, active-matrix organic light-emitting diode (AMOLED) display, or the like. The display can include a touchscreen, which is sometimes termed a touch-sensitive display. The display is configured to display information to a user of the mobile device 100. In other embodiments, the output device 102 includes a speaker for outputting audio. In yet other embodiments, the output device 102 includes a vibrator for causing the mobile device 100 to vibrate.

The input device 104 can include a mechanical keyboard as depicted in some of the Figures, such as a full or reduced keyboard. Full keyboards include QWERTY keyboards and international equivalents (e.g., QWERTZ). Reduced keyboards include keyboards having many fewer keys than glyphs, such as 12-key telephone keypads. In addition to or instead of a keyboard, the input device 104 can include a touchscreen, which may include a virtual keyboard. In some embodiments, such as those with a virtual keyboard, the input device 104 and the output device 102 can be considered the same physical device. In other embodiments, the input device 104 includes a small number (e.g., one to five) of mechanical or touch-sensitive keys for navigating menus and responding to prompts. In yet other embodiments, the input device 104 includes a microphone for receiving an audio command.

The memory 106 is capable of storing an alert 110. In this example embodiment, the alert 110 is an audio alert which can be played via a speaker of the output device 102, In other embodiments, the alert 110 can be a visual alert which can be displayed on a display of the output device 102. In yet other embodiments, the alert 110 can be a tactile alert which can be presented via a vibrator of the output device 102.

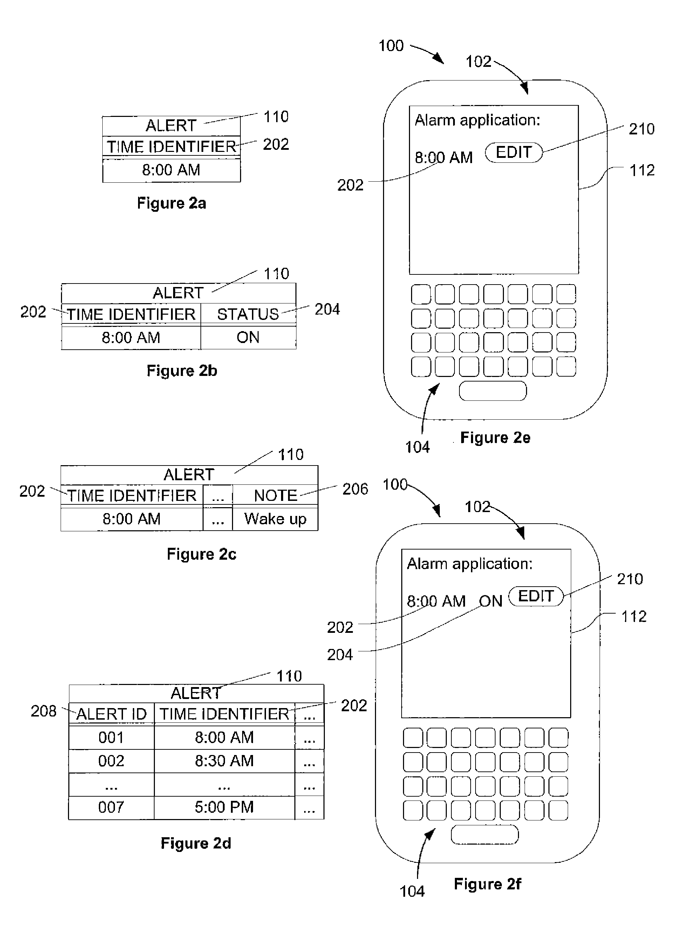

Referring to Figures 2a-f, the alert 110 includes a time identifier 202. The processor 108 is configured to present the alert 110 via the output device 102 when a current time is approximately equal to the time identifier 202 associated with the alert 110. As seen in Figures 2b-c, the alert 110 can have other information associated therewith, such as a status 204, a note 206, or the like. In some embodiments, the status 204 of the alert 110 can be changed between "ON", "OFF", "WEEKDAYS", or the like. Changing the status 204 to "WEEKDAYS", for example, would cause the alert 110 to be presented via the output device 102 only on weekdays and not on weekends. Similarly, the processor 108 can cause the note 206 to be presented via the output device 102 when the time identifier 202 is approximately equal to the current time. As seen in Figure 2d, the alert 110 can include two or more alerts and each of the two or more alerts can be identified by a distinct alert id 208.

The memory 106 includes an alert configuration application 112 for configuring the alert 110. In an example embodiment shown in Figure 2e, the alert 110 is an alarm and the alert configuration application 112 is an alarm application. The alert configuration application 112 displays the time identifier 202 associated with the alert 110 and provides an alert configuring option 210 to change the time identifier 202 associated with the alert 110. In some embodiments, the alert configuring option 210 can be invoked by selecting the displayed time identifier 202. In another example embodiment shown in Figure 2f, the alert configuration application 112 displays the status 204 associated with the alert 110. In this example embodiment, the status 204 or the time identifier 202 associated with the alert 110 can be changed by invoking the alert configuring option 210 and selecting a different value for the status 204 or the time identifier 202.

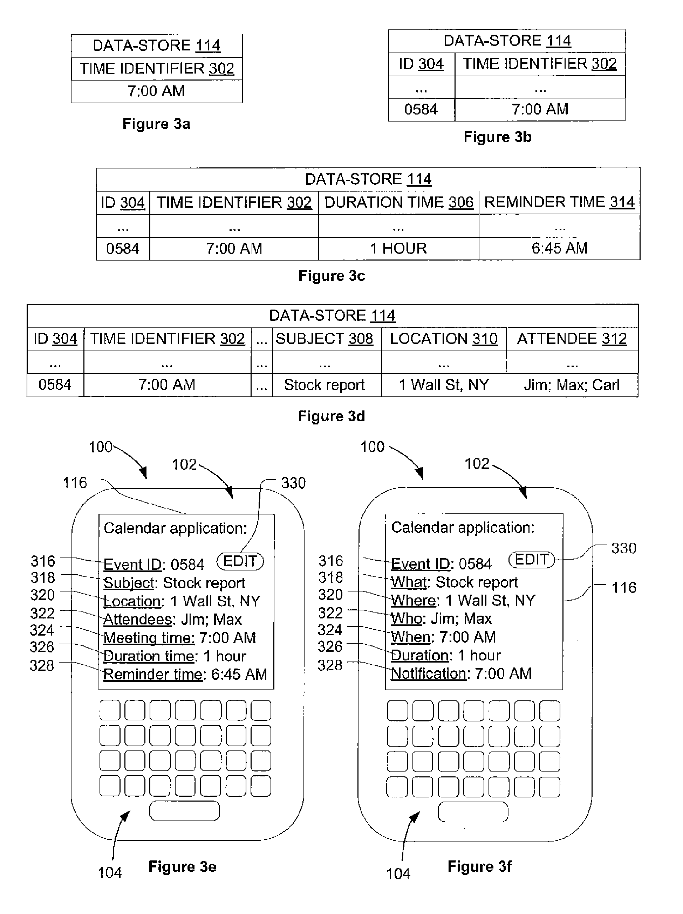

In this example embodiment, the memory 106 includes a data-store 114 for storing records, such as calendar events or tasks. Example embodiments of the data-store 114 can be seen in Figures 3a-d. Figure 3a shows a data-store 114 having a record and a time identifier 302 being associated with the record. Figure 3b shows a data-store 114 capable of storing one or more records, each record having an ID 304 and a time identifier 302. Figure 3c shows a data-store 114 capable of storing one or more records, each record having an ID 304, a time identifier 302, a duration time 306 and a reminder time 314. As seen in Figure 3c, the reminder time 314 can have a different value from the time identifier 302. In some embodiments, the reminder time 314 has the same value as the time identifier 302. Figure 3d shows a data-store 114 capable of storing one or more records, each record having an ID 304, time identifier 302, a subject 308, a location 310, and at least one attendee 312.

The memory 106 further includes a data-store configuration application 116 for configuring the data-store 114. In example embodiments shown in Figures 3e-f, the data-store 114 is a calendar, the records in the data-store 114 are calendar events and the data-store configuration application 116 is a calendar application.

Figure 3e shows an ID display element 316, a subject display element 318, a location display element 320, an attendee display element 322, a time identifier display element 324, a duration time display element 326, a reminder time display element 328 and a record configuring option 330.

The ID display element 316 displays an ID 304 from a record in the data-store 114. The subject display element 318 displays a subject 308 from the record in the data-store 114. The location display element 320 displays a location 310 from the record in the data-store 114. The attendee display element 322 displays an attendee 312 from the record in the data-store 114. The time identifier display element 324 displays a time identifier 302 from the record in the data-store 114. In this example embodiment, the time identifier 302 represents a meeting start time. In other embodiments, the time identifier 302 can represent a meeting end time. The duration time display element 326 displays a duration time 306 from the record in the data-store 114. In this example embodiment, the reminder time display element 328 displays a reminder time 314 from the record in the data-store 114. In other embodiments, the reminder time display element 328 can display the time identifier 302 from the record. The record configuring option 330 can be invoked via the input device 104 to modify values of the record being displayed by the data-store configuration application 116.

Figure 3f illustrates that indicia used to present display elements 316, 318, 320, 322, 324, 326 or 328 can be varied. For example, the subject display element 318 can be indicated by displaying "Subject" or "What". In other embodiments images can be used to indicate presence of display elements 316, 318, 320, 322, 324, 326 or 328. The reminder display or notification element 328 can display a time identifier 302 from a record in the data-store 114.

In this example embodiment, the memory 106 stores information about the operating modes 118 in which the mobile device 100 is capable of operating. The memory 106 includes an operating mode selection application 120. In some embodiments, the memory 106 can include an operating mode scheduler application 122.

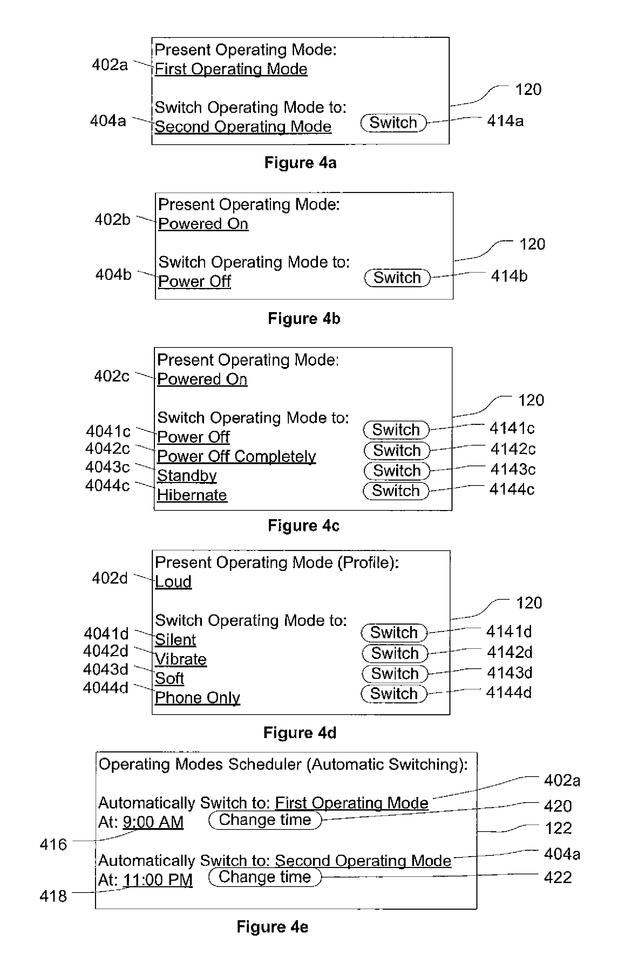

Figures 4a-d provide example embodiments of the operating modes selection application 120. In an example embodiment of Figure 4a, the operating modes selection application 120 shows a first operating mode 402a, a second operating mode 404a and an operating mode switching option 414a to switch the mobile device 100 from the first operating mode 402a to the second operating mode 404a.

As seen in the example embodiment of Figure 4b, the first operating mode 402a can be a powered-on operating mode 402b, the second operating mode 404a can be a power-off operating mode 404b and the operating mode switching option 414b can switch the mobile device 100 from the powered-on operating mode 402b to the power-off operating mode 404b. In this example embodiment, the mobile device 100 consumes less power in the power-off operating mode 404b than in the powered-on operating mode 402b. In some example embodiments, in the powered-on operating mode 402b the input device 104, the output device 102, the processor 108 and the memory 106 are powered-on, whereas in the power-off operating mode 404b the input device 104 and the output device 102 can be powered-off to conserve power.

As seen in the example embodiment of Figure 4c, the second operating mode 404a can be any one of a power-off operating mode 4041c, a power-off-completely operating mode 4042c, a standby operating mode 4043c and a hibernate operating mode 4044c. In some example embodiments, the mobile device 100 consumes less power in the hibernate operating mode 4044c than in the standby operating mode 4043c. Furthermore, in the standby operating mode 4043c data can be stored in a Random Access Memory (RAM) of the memory 106, whereas in the hibernate operating mode 4044c data can be stored elsewhere, such as in a hard drive or other memory if provided. The operating mode selection application 120 can include an operating mode switching option 4141c to switch the mobile device 100 to the power-off operating mode 4041c. The operating mode selection application 120 can include an operating mode switching option 4142c to switch the mobile device 100 to the power-off-completely operating mode 4042c. The operating mode selection application 120 can include an operating mode switching option 4143c to switch the mobile device 100 to the standby operating mode 4043c. The operating mode selection application 120 can include an operating mode switching option 4144c to switch the mobile device 100 to the hibernate operating mode 4044c.

The mobile device 100 consumes less power in the power-off-completely operating mode 4042c than in the power-off operating mode 4041c. In some example embodiments, in the power-off operating mode 4041c the output device 102 can be powered off whereas in the power-off-completely operating mode 4042c the output device 102 and the input device 104 can be powered off to conserve more power.

In the example embodiment of Figure 4d, the first operating mode 402a is a loud operating mode 402d and the second operating mode 404a can be any one of a si lent operating mode 4041d, a vibrate operating mode 4042d, a soft operating mode 4043d and a phone-only operating mode 4044d. The operating mode selection application 120 can include an operating mode switching option 4141 d to switch the mobile device 100 to the silent operating mode 4041d. The operating mode selection application 120 can include an operating mode switching option 4142d to switch the mobile device 100 to the vibrate operating mode 4042d. The operating mode selection application 120 can include an operating mode switching option 4143d to switch the mobile device 100 to the soft operating mode 4043d. The operating mode selection application 120 can include an operating mode switching option 4144d to switch the mobile device 100 to the phone-only operating mode 4044d.

In this example embodiment, the various operating modes correspond to different power consumption levels of the output device 102. For example, the loud operating mode 402d can correspond to the output device 102 operating at a very high power capacity, the silent operating mode 4041d can correspond to the output device 102 operating at a very low power capacity, the vibrate operating mode 4042d can correspond to the output device 102 operating at a low power capacity, the soft operating mode 4043d can correspond to the output device 102 operating at a medium power capacity and the phone-only operating mode 4044d can correspond to the output device 102 operating at a high power capacity. It will be understood that the levels provided in this example embodiment can be varied and that further operating modes can be used to provide more granularity in the number of available power consumption levels for the mobile device 100.

Figure 4e provides an example embodiment of an operating modes scheduler application 122. As seen in Figure 4e, the mobile device 100 is capable of automatically switching to the first operating mode 402a at a first automatic switching time 416. In some embodiments, the mobile device 100 is also capable of automatically switching to the second operating mode 404a at a second automatic switching time 418. The operating modes scheduler application 122 includes a first time changing option 420 for changing the first automatic switching time 416. The operating mode scheduler application 122 can include a second time changing option 422 for changing the second automatic switching time 418. The first operating mode 402a and the second operating mode 404a can be any one of the various operating modes shown in Figures 4b-d or they can be any other operating modes.

From the foregoing, it will be understood that the mobile device 100 can be configured to present an alert 110 via the output device 102 when a current time is approximately equal to a time identifier 202 associated with the alert 110. The mobile device 110 can be further configured to present a record from a data-store 114 via the output device 102 when a current time is approximately equal to a time identifier 302 associated with the record in the data-store 114.

Most users of electronic devices, such as the mobile device 100, prefer the alert 110 and a record from the data-store 114 to be presented in different manners. In an example scenario, the alert 110 is an 8:00 am wake-up alarm which the output device 102 presents by playing loud music to wake up the user. Records in the data-store 114, such as calendar events, are presented through the output device 102 by displaying a notification instead of playing loud music to avoid disturbing other individuals in the vicinity. Due to the quieter and more subtle manner in which records from the data-store 114 (e.g. calendar event notifications) are presented, presenting records of the data-store 114 usually consumes less power than presenting the alert 110 (e.g. the wake-up alarm). Since the number of calendar events typically outnumbers the number of alarms, causing the output device 102 to present data-store 114 records at a relatively low power consumption level can lead to significant power savings.

In an example scenario, the mobile device 100 can be configured such that the alert 110 has a time identifier 202 of 8:00am which can represent a morning alarm to wake up a user of the mobile device 100. The mobile device 100 can be configured such that when a current time is approximately equal to the time identifier 202 (e.g. 8:00 am) then the output device 102 presents the alert 110 (e.g. the morning alarm to wake up the user) by playing a sound, vibrating the mobile device 100 and displaying a notification. The data-store 114 can include several records; each record having a time identifier 302 associated therewith; and each record can represent a calendar event occurring during the day. Example records in the data-store 114 can include a team meeting at 9:00 am, a lunch meeting at 12:00 pm, a progress meeting at 2:00 pm, a gym meeting at 6:00 pm, a dinner meeting at 8:00 pm, etc. The mobile device 100 can be configured such that when the current time is approximately equal to a time identifier 302 associated with one of the records then the output device 102 presents the record by displaying a notification.

It can be understood that the presentation of the alert 110 is more likely to attract attention of the user than the presentation of the records from the data-store 114. If the data-store 114 includes a record having a time identifier 302 sooner than the time identifier 202 of the alert 110 then presentation of the record will likely not attract attention. For example, the data-store 114 can include a record having a time identifier 302 of 7:00 am (e.g. a 7:00 am calendar event as shown in Figures 3a-d). The 7:00 am record is sooner than the alert 110 having a time identifer 202 of 8:00 am (e.g. a morning alarm to wake up the user). In this example scenario, if the output device 102 presents the record having a time identifier 302 of 7:00 am by displaying a notification then it is unlikely that the presentation of the record (displayed notification) will be observed by the user because the user will probably still be sleeping when the record is presented and it is unlikely that displaying the notification will wake the user up. Hence, in this example scenario, the user will likely not be able to attend the 7:00 am calendar event. The usefulness of the mobile device 100 is reduced due to the presentation of the record not being able to provide sufficient notice and attract attention.

In some embodiments, the mobile device 100 can be configured to automatically switch between operating modes 1 1 8 when a current time is approximately equal to a time identifier 202 associated with an alert 110, and upon automatically switching operating modes 118 the alert 110 can be presented via the output device 102. In some example embodiments, the mobile device 100 is configured to automatically switch from the second operating mode 404a to the first operating mode 402a when the current time is approximately equal to the sooner of the first automatic switching time 416 and the time identifier 202 associated with the alert 110. Advantageously, the operating modes 118 can be controlled by the alert 110, thereby permitting the alert 110 to be presented via the output device 102 in several of the operating modes 118.

In an example scenario, the mobile device 100 is configured to automatically switch from the powered-off operating mode 404b to the powered-on operating mode 402b when the current time is approximately equal to the sooner of the first automatic switching time 416 (e.g. 9:00 am) and the time identifier 202 associated with the alert 110 (e.g. 8:00 am). Advantageously, the mobile device 100 will switch to the powered-on operating mode 402b and present the alert 110 when the current time is approximately equal to the time identifier 202 (e.g. an 8:00 am morning alarm for waking up the user). It can be understood that a record having a time identifier 302 (e.g. a 7:00 am calendar event) sooner than the time identifier 202 of the alert 110 will not be presented when the current time is approximately equal to the time identifier 302 because the mobile device 100 will be in the powered-off operating mode 404b and the output device 102 will not be able to present the record at the time identifier 302 due to lack of power. The usefulness of the mobile device 100 is reduced due to the mobile device 100 not being able to present the record via the output device 102 when the current time is approximately equal to the time identifier 302 associated with the record.

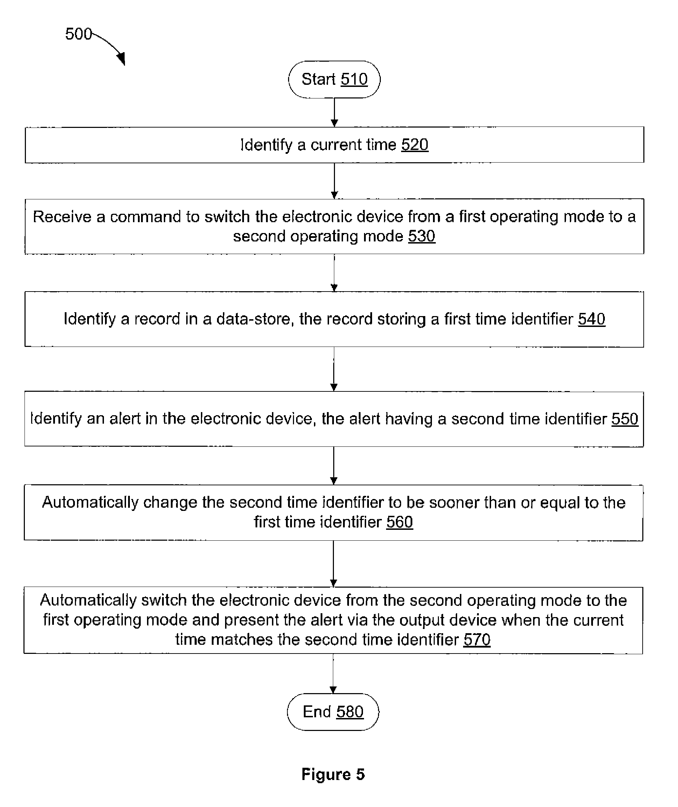

To address the above issue, Figure 5 shows a flowchart of a method 500 starting at step 510 in accordance with the present disclosure. The method 500 can be implemented on an electronic device, such as the mobile device 100.

At step 520, the mobile device 100 identifies a current time.

At step 530, a command is received to switch the mobile device 100 from a first operating mode 402a to a second operating mode 404a. In an example embodiment, the command is received via the input device 104. In other example embodiments, the command is stored in the memory 106 and the processor 108 is configured to automatically execute the command when the current time is approximately equal to a predetermined time. For example, the command can be to automatically switch the device 100 from a powered-on operating mode 402b to a powered-off operating mode 404b when the current time is approximately equal to 10:00 pm.

At step 540, the mobile device 100 identifies a record in a data-store 114, the record storing a first time identifier 302. In an example embodiment, the data-store 114 comprises an electronic calendar, the record comprises a calendar event and the first time identifier 302 comprises an event start time. For example, a 7:00 am calendar event (see Figures 3a-f).

At step 550, the mobile device 100 identifies an alert 110 stored in the mobile device 100, the alert 110 including a second time identifier 202, In an example embodiment, the alert 110 comprises an alarm and the second time identifier 202 comprises a time associated with the alarm. For example, an 8:00 am wake-up alarm (see Figures 2a-f).

As explained above, the device 100 can be configured to present the alert 110 and the record via the output device 102. However, typically the device 100 contains more records in the data-store 114 than alerts 110. So, the alert 110 is typically presented at a higher power consumption level than most records in the data-store 114 and the alert 110 can be presented in more operating modes than the records. Furthermore, the device 100 can be configured to automatically switch between a first operating mode 402a and a second operating mode 404a when the current time is sooner than or approximately equal to the second time identifier 202 associated with the alert 110, and the output device 102 can present the alert 110 when the current time is equal to or approximately equal to the second time identifier 202. For example, if the device 100 has been switched (manually or automatically) to the powered-off operating mode 404b at 10:00 pm then the device 100 can automatically switch to the powered-on operating mode 402b when the current time is approximately equal to an alarm time of 8:00 am (see Figures 2a-f) the following morning and the alarm can be presented via the output device 102. However, in this example, the device 100 may not be able to present the 7:00 am calendar event (see Figures 3a-f) because the device 100 will be in the powered-off operating mode 404b and the device 100 may not be configured to present the 7:00 am calendar event or other records in the data-store 114 while in the powered-off operating mode 404b.

At step 560, the mobile device 100 automatically changes the second time identifier 202 to be sooner than or equal to the first time identifier 302. For example, the device 100 automatically changes the 8:00 am alarm time to 7:00 am, so that the new time associated with the alarm (7:00 am) is equal to the time associated with the 7:00 am calendar event, In an example embodiment, the device 100 automatically changes the second time identifier 202 to be sooner than the first time identifier 302 such that the difference between the first time identifier 302 and the second time identifier 202 is equal to a predetermined time difference. For example, the device 100 automatically changes the 8:00 am alarm to be 15 minutes sooner than the 7:00 am calendar event. The predetermined time difference can be changed via the input device 104. For example, the predetermined time difference can be changed to 30 minutes, so that the device 100 can automatically change the 8:00 am alarm to be 30 minutes sooner than the 7:00 am calendar event.

At step 570, the mobile device 100 is automatically switched from the second operating mode 404a to the first operating mode 402a and the alert 110 is presented via the output device 102 when the current time matches the second time identifier 202, thus ending the example method 500 at step 580. For example, the device 100 automatically switches from the powered-off operating mode 404b to the powered-on operating mode 402b when the current time is equal to an alarm time of 6:45 am, the output device 102 presents the alarm at 6:45 am and then the output device 102 presents the 7:00 am calendar event when the current time is equal to 7:00 am. Advantageously, the presenting of the 7:00 am calendar event will not inadvertently be omitted by the device 100 simply because the device 100 was in an operating mode where the device 100 is unable to present the 7:00 am calendar event.

In some example embodiments, the alert 110 can have multiple instances (e.g. an 8:00 am weekday alarm). In this example embodiment, not all instances of the alert 110 have to be changed. For example, if there is a 7:00 am calendar event on Monday then only the Monday instance of the alarm can be changed from 8:00 am to 7:00 am and all other instances of the alarm (Tues, Wed, Thu and Fri) can be left unchanged.

Advantageously, by automatically changing the second time identifier 202 to be sooner than or equal to the first time identifier 302, the usability of the device 100 has been increased thereby making the device 100 more controllable.

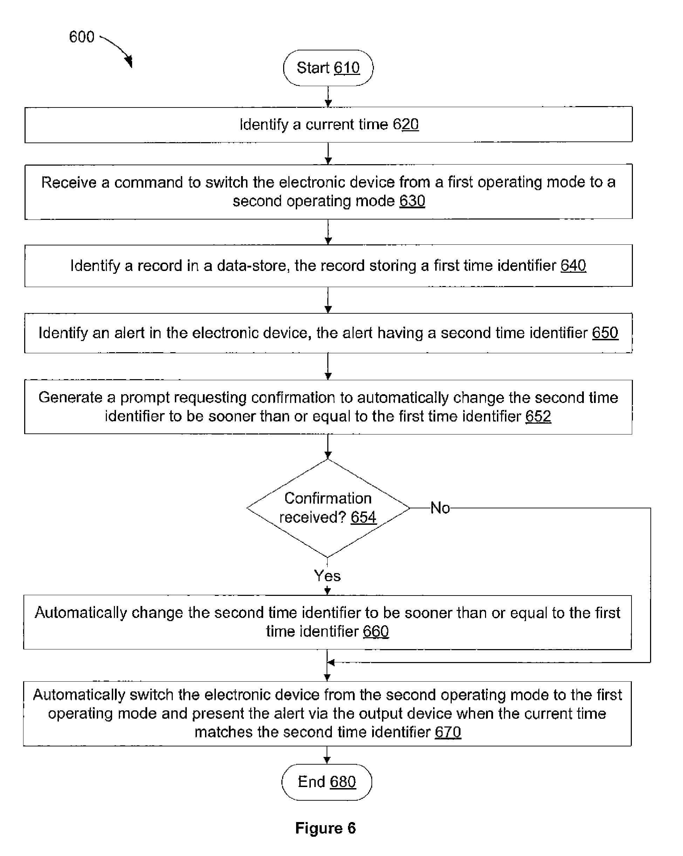

Figure 6 shows a flowchart of a method 600 starting at step 610. At step 620, the mobile device identifies a current time. At step 630, the mobile device 100 receives a command to switch the mobile device 100 from a first operating mode 402a to a second operating mode 404a (e.g. from a powered-on operating mode 402b to a powered-off operating mode 404b). At step 640, the mobile device 100 identifies a record in a data-store 114 (e.g. a calendar event in an electronic calendar). The record includes a first time identifier 302 (e.g. an event start time). At step 650, the mobile device 100 identifies an alert (e.g. an alarm) in the mobile device 100, the alert having a second time identifier 202 (e.g. an alarm time).

At step 652, the device 100 generates a prompt and the prompt is presented via the output device 102. The prompt conveys that the second time identifier 202 is about to be changed. The prompt can request for a confirmation to change the second time identifier 202. In some example embodiments, the prompt conveys that the second time identifier 202 is being changed and the prompt does not request a confirmation, thus step 654 can be skipped.

At step 654, the device 100 checks whether the confirmation to change the second time identifier 202 was received. If the confirmation is received then the method 600 proceeds to step 660. Otherwise, the method 600 proceeds to step 670.

At step 660, the mobile device 100 automatically changes the second time identifier 202 to be sooner than or equal to the first time identifier 302 (e.g. the mobile device 100 automatically changes the alarm time to 15 minutes sooner than the event start time).At step 670, the mobile device 100 automatically switches from the second operating mode 402b to the first operating mode 402a and presents the alert via the output device 102 when the current time matches the second time identifier 202. For example, the mobile device 100 automatically switches from the powered-off operating mode 404b to the powered-on operating mode 402b and presents the alarm via the output device 102 when the current time equals the alarm time. The method 600 ends at step 680.

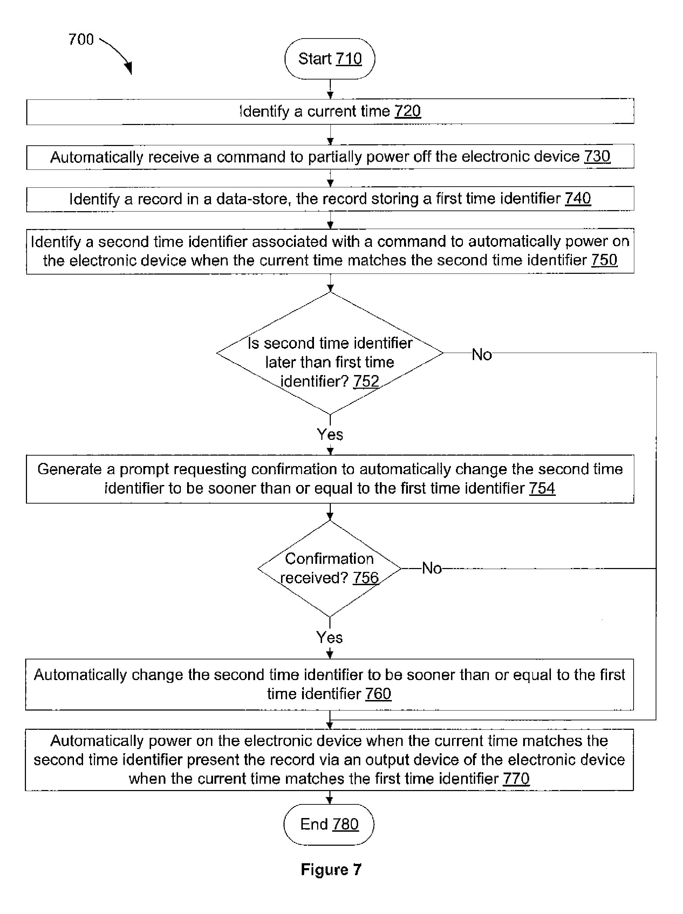

Figure 7 shows a flowchart of a method 700 starting at step 710. At step 720, the mobile device identifies a current time.

At step 730, the device 100 automatically receives a command to partially power off the device 100. In some example embodiments, when the device 100 is partially powered off then the output device 102 is completely disabled or partially disabled. The output device 102 can be completely disabled by not providing any power to the output device 102. The output device 102 can be partially disabled by not providing sufficient power for the output device 102 to operate fully. It will be understood that when the device 100 is partially powered off then the output device 102 may not be able to present records from the data-store 114 or the alert 110. In some example embodiments, the command to partially power off the device 100 can be configured via the operating modes scheduler application 122 (see Figure 4e). In some embodiments, the processor 108 is configured to automatically trigger the command to partially power off the device 100.

At step 740, the device 100 identifies a record in a data-store 114 (e.g. a calendar event in an electronic calendar). The record includes a first time identifier 302 (e.g. an event start time).

At step 750, the device 100 identifies a second time identifier associated with a command to automatically power on the device 100 when the current time matches the second time identifier. When the device 100 is powered on then the output device 102 is capable of presenting the alert 110 (e.g. an alarm) or records from the data-store 114 (e.g. calendar events from an electronic calendar). In an example embodiment, the command to automatically power on the device 100 and the second time identifier can be configured via the operating modes scheduler application 122 (see Figure 4e).

At step 752, it is determined whether the second time identifier is later than the first rime identifier. For example, the device 100 determines whether the time at which the device 100 is scheduled to automatically turn on is later than an event start time for an event in the electronic calendar (e.g. the first event on a particular day).

At step 754, the device 100 generates a prompt requesting confirmation to automatically change the second time identifier to be sooner than or equal to the first time identifier. For example, the prompt may read "You have a calendar event before the device will automatically turn on. Do you want the device to automatically turn on 15 minutes before the calendar event?" At step 756, the device 100 determines whether the confirmation is received and, upon receiving the confirmation, the device 100 automatically changes the second time identifier to be sooner than or equal to the first time identifier, at step 760.

At step 760, the device 100 automatically changes the second time identifier to be sooner than or equal to the first time identifier 302. In an example embodiment, the second time identifier comprises a time at which the device 100 is automatically powered on (see Figure 4e) and the first time identifier 302 comprises a calendar event reminder time (see Figure 3c). Advantageously, when the current time is approximately equal to the calendar event reminder time then the device 100 will be in an operating mode in which the device 100 will be able to present the calendar event.

In some example embodiments, the second time identifier can have multiple instances (e.g. an 8:00 am weekday power-on time). In this example embodiment, not all instances of the second time identifier have to be changed. For example, if there is a 7:00 am calendar event on Monday then only the Monday instance of the second time identifier can be changed from 8:00 am to 7:00 am and all other instances of the second time identifier (Tues, Wed, Thu and Fri) can be left unchanged.

At step 770, the device 100 automatically turns on at a scheduled time, as per the second time identifier, and the calendar event is presented via the output device 102 when the current time matches the first time identifier (e.g. a reminder for the calendar event may be displayed 15 minutes prior to the event start time). The method 700 ends at step 780.

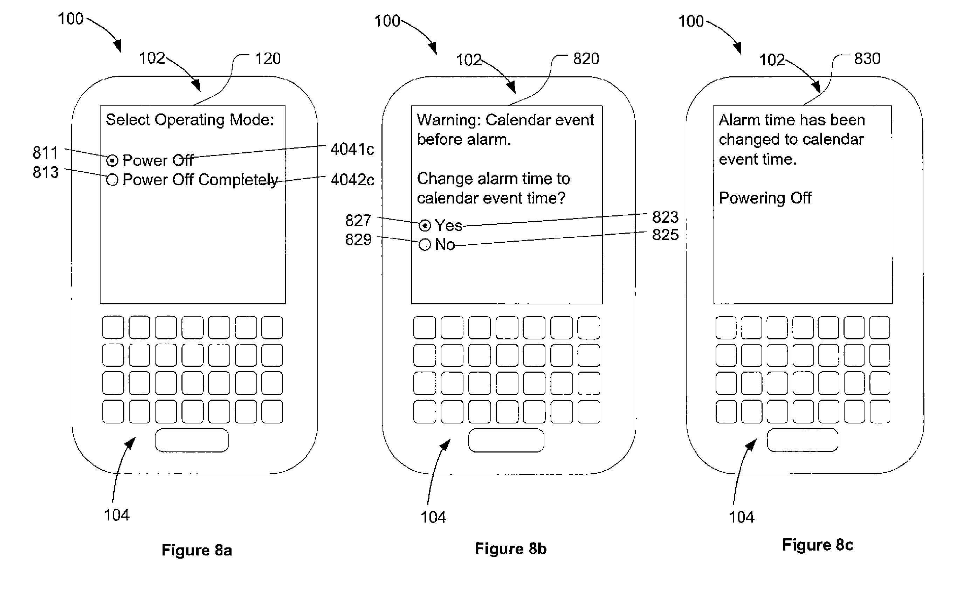

Figures 8a-c show example schematic representations of the device 100. In Figure 8a, the output device 102 is displaying an operating modes selection application 120. The operating modes selection application 120 shows the power-off operating mode 4041c and the power-off completely operating mode 4042c. Also shown is a power-off operating mode selection option 811 and a power-off-completely operating mode selection option 813. Either of the power-off operating mode selection option 811 or the power-off-completely operating mode selection option 813 can be selected via the input device 104. In this example scenario, the input device 104 receives an input to select the power-off operating mode selection option 811.

Figure 8b shows an example of what can happen in response to the power-off operating mode selection option 811 being selected. The output device 102 displays a prompt 820, which requests confirmation to change an alarm time to a calendar event time. Also shown are a first response element 823 and a second response element 825. In this example embodiment, the first response element 823 displays "yes" and the second response element 825 displays "no". In other example embodiments the first response element 823 can display "proceed", "confirm", or the like and the second response element 825 can display "not proceed", "deny", or the like.

Figure 8b also shows a first response selection option 827 and a second response selection option 829. Either of the first response election option 827 or the second response selection option 829 can be selected via the input device 104. In this example scenario, the input device 104 receives an input to select the first response selection option 827.

Figure 8c shows an example of what can happen in response to the selection of the first response option 827. The output device 102 displays a status screen 830 which conveys that the alarm time has been changed to the calendar event time.

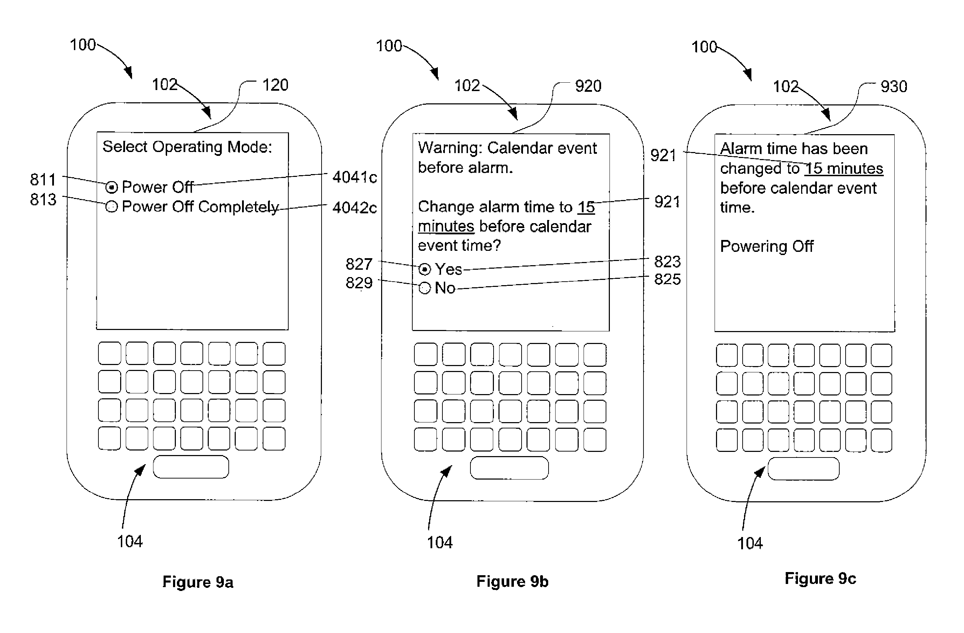

Figures 9a-c show example schematic representations of the device 100. Figure 9a is substantially the same as Figure 8a, and includes a selection of the power-off operating mode selection option 811.

As can be seen in Figure 9b, the alarm time can be automatically changed to a predetermined time 921 before a calendar event time. In the example scenario, the predetermined time 921 is 15 minutes. In some example embodiments, the predetermined time 921 can be configured to some other time value, such as 30 minutes.

Figure 9c shows a status screen 930 which conveys that the alarm time has been changed to the predetermined time 921 before the calendar event time.

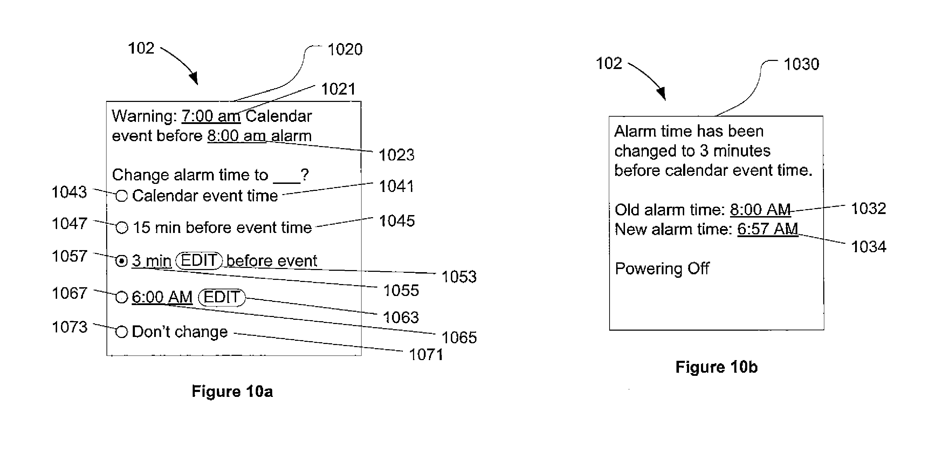

Figures 10a-b show example schematic representations of the output device 102. Figure 10a shows the output device 102 displaying a prompt 1020 which can be displayed in response to the selection of the power-off operating mode selection option 811, for example.

The prompt 1020 shows a calendar event time 1021 (e.g. 7:00 am) which is sooner than an alarm time 1023 (e.g. 8:00 am).

The prompt 1020 provides various options to change the alarm time 1023. For example, the alarm time 1023 can be changed to the calendar event time 1021 in response to the selection of the selection option 1043.

The alarm time 1023 can be changed to a default time, such as 15 minutes, before the calendar event time 1021 in response to the selection of the selection option 1047.

The alarm time 1023 can be changed to a configurable time 1055 before the calendar event time 1021 in response to the selection of the selection option 1057. The configurable time 1055 can be changed via a time changing option 1053.

The alarm time 1023 can be changed to a configurable set time 1065 in response to the selection of the selection option 1067. The configurable set time 1065 can be changed via a time changing option 1063.

The alarm time 1023 can be left unchanged by selecting a "don't change" option 1071 in response to the selection of selection option 1073.

Figure 10b shows a status screen 1030 which conveys whether the alarm time 1023 has been changed or not. The status screen 1030 displays an old alarm time 1032 which represents the alarm time 1023 before it was changed. The status screen 1030 displays a new alarm time 1034 which represents the alarm time 1023 after it was changed.

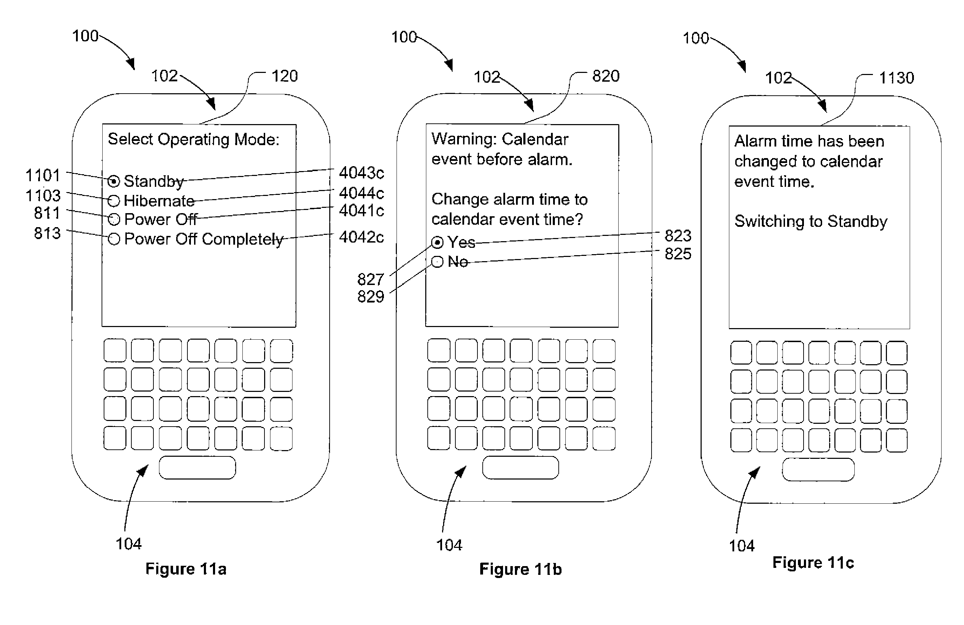

Figures 11a-c show example schematic representations of the device 100. Figure 11a shows the output device 102 displaying the operating modes selection application 120. In this example embodiment, the operating mode selection application 120 permits selection of one of four operating modes.

The standby operating mode 4043c can be selected by selecting the standby operating mode selection option 1101.

The hibernate operating mode 4044c can be selected by selecting the standby operating mode selection option 1103.

The power-off operating mode 4041c and the power-off-completely operating mode 4042c can be selected by selecting the power-off operating mode selection option 811 and the power-off-completely operating mode selection option 813, respectively.

Figure 11b is substantially the same as Figure 8b. In this example scenario, in response to the selection of the standby operating mode 4043c, the prompt 820 can be displayed.

Figure 11c shows the output device 102 displaying a status screen 1130. The status screen 1130 can be displayed in response to the selection of the first response selection option 827. The status screen 1130 conveys that the alarm time has been changed.

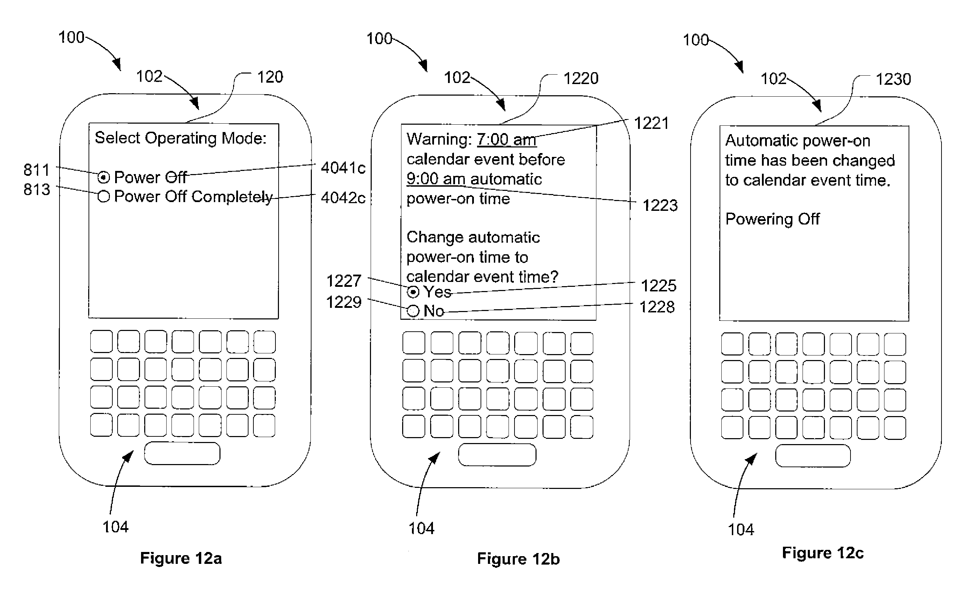

Figures 12a-c show example schematic representation of the device 100. Figure 12a is substantially the same as Figure 8a, and indicates selection of the power off operating mode selection option 811.

Figure 12b shows a prompt 1220 which can be displayed in response to a selection of the power-off operating mode selection option 811. The prompt 1220 can be displayed if a calendar event time 1221 is sooner than an automatic power-on time 1223. In some embodiments, the automatic power-on time 1223 can be changed via the operating modes scheduler application 122 (see Figure 4e). The automatic power-on time 1223 comprises a time when the device 100 automatically switches to the powered-on operating mode 402c.

The automatic power-on time 1223 is changed to the calendar event time if a first response 1225 is selected. The first response 1225 can be selected via the first response selection option 1227. In this example embodiment, the first response 1225 is shown as "yes".

The automatic power-on time 1223 remains unchanged if a second response 1228 is selected. The second response 1228 can be selected via the second response selection option 1229. In this example embodiment, the second response 1228 is shown as "no".

Figure 12c shows a status screen 1230 which conveys whether the automatic power-on time 1223 has been changed.

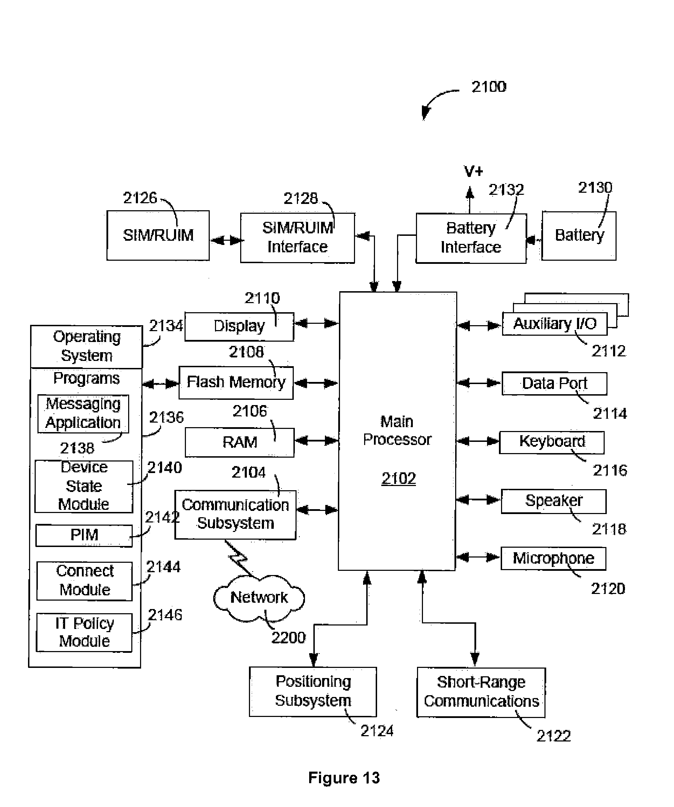

Referring to Figure 13, shown therein is a block diagram of an example embodiment of a mobile device 2100. The mobile device 2100 is similar to the device 100 described above in that the methods and embodiments described above can also be implemented on the device 2100. The mobile device 2100 includes a number of components such as a main processor 2102 that controls the overall operation of the mobile device 2100. Communication functions, including data and voice communications, are performed through a communication subsystem 2104. The communication subsystem 2104 receives messages from and sends messages to a wireless network 2200.

The main processor 2102 also interacts with additional subsystems such as a Random Access Memory (RAM) 2106, a flash memory 2108, a display 2110 which is an example output device 102, an auxiliary input/output (I/O) subsystem 2112, a data port 2114, a keyboard 2116 or other input device (e.g., see input device 104), a speaker 2118, a microphone 2120, short-range communications 2122 and a positioning subsystem 2124 (such as a GPS subsystem).

Some of the subsystems of the mobile device 2100 perform communication-rotated functions, whereas other subsystems may provide "resident" or on-device functions. By way of example, the display 2110 and the keyboard 2116 may be used for both communication-related functions, such as entering a text message for transmission over the network 2200, and device-resident functions such as a calculator or task list.

The mobile device 2100 can send and receive communication signals over the wireless network 2200 after required network registration or activation procedures have been completed. Network access is associated with a subscriber or user of the mobile device 2100. To identify a subscriber, the mobile device 2100 requires a SIM/RUIM card 2126 (i.e., Subscriber Identity Module or a Removable User Identity Module) to be inserted into a SIM/RUIM interface 2128 in order to communicate with a network. The SIM card or RUIM 2126 is one type of a conventional "smart card" that can be used to identify a subscriber of the mobile device 2100 and to personalize the mobile device 2100, among other things.

The mobile device 2100 is a battery-powered device and includes a battery interface 2132 for receiving one or more rechargeable batteries 2130. In at least some embodiments, the battery 2130 can be a smart battery with an embedded microprocessor. The battery interface 2132 is coupled to a regulator (not shown), which assists the battery 2130 in providing power V+ to the mobile device 2100. Although current technology makes use of a battery, future technologies such as micro fuel cells may provide the power to the mobile device 2100.

The mobile device 2100 also includes an operating system 2134 and software components 2136 to 2146. The operating system 2134 and the software components 2136 to 2146 that are executed by the main processor 2102 are typically stored in a persistent store such as the flash memory 2108, which may alternatively be a read-only memory (ROM) or similar storage element (not shown). Those skilled in the art will appreciate that portions of the operating system 2134 and the software components 2136 to 2146, such as specific device applications, or parts thereof, may be temporarily loaded into a volatile store such as the RAM 2106. Other software components can also be included, as is well known to those skilled in the art.

Other types of software applications can also be installed on the mobile device 2100. These software applications can be third party applications, which are added after the manufacture of the mobile device 2100. Examples of third party applications include games, calculators, utilities, etc.

The additional applications can be loaded onto the mobile device 2100 through at least one of the wireless network 2200, the auxiliary I/O subsystem 2112, the data port 2114, or the short-range communications subsystem 2122. This flexibility in application installation increases the functionality of the mobile device 2100 and may provide enhanced on-device functions, communication-related functions, or both. For example, secure communication applications may enable electronic commerce functions and other such financial transactions to be performed using the mobile device 2100.

The data port 2114 enables a subscriber to set preferences through an external device or software application and extends the capabilities of the mobile device 2100 by providing for information or software downloads to the mobile device 2100 other than through a wireless communication network. The alternate download path may, for example, be used to load an encryption key onto the mobile device 2100 through a direct and thus reliable and trusted connection to provide secure device communication.

The data port 2114 can be any suitable port that enables data communication between the mobile device 2100 and another computing device. The data port 2114 can be a serial or a parallel port. In some instances, the data port 2114 can be a USB port that includes data lines for data transfer and a supply line that can provide a charging current to charge the battery 2130 of the mobile device 2100.

The short-range communications subsystem 2122 provides for communication between the mobile device 2100 and different systems or devices, without the use of the wireless network 2200. For example, the subsystem 2122 may include an infrared device and associated circuits and components for short-range communication. Examples of short-range communication standards include standards developed by the Infrared Data Association (IrDA), Bluetooth, and the 802.211 family of standards developed by IEEE.

In use, a received signal such as a text message, an e-mail message, or web page download will be processed by the communication subsystem 2104 and input to the main processor 2102. The main processor 2102 will then process the received signal for output to the display 2110 or alternatively to the auxiliary I/O subsystem 2112. A subscriber may also compose data items, such as e-mail messages, for example, using the keyboard 2116 in conjunction with the display 2110 and possibly the auxiliary I/O subsystem 2112. The auxiliary subsystem 2112 may include devices such as: a touch screen, mouse, trackball, infrared fingerprint detector, a trackpad, a joystick, or a roller wheel with dynamic button pressing capability. The keyboard 2116 can be an alphanumeric keyboard and/or telephone-type keypad. However, other types of keyboards may also be used. A composed item may be transmitted over the wireless network 2200 through the communication subsystem 2104.

For voice communications, the overall operation of the mobile device 2100 is substantially similar, except that the received signals are output to the speaker 2118, and signals for transmission are generated by the microphone 2120. Alternative voice or audio I/O subsystems, such as a voice message recording subsystem, can also be implemented on the mobile device 2100. Although voice or audio signal output is accomplished primarily through the speaker 2118, the display 2110 can also be used to provide additional information such as the identity of a calling party, duration of a voice call, or other voice call related information.

An advantage of the present disclosure is that a record in a data-store can be presented effectively even when the presentation of the record is scheduled at a time when the device is in a mode in which the presentation of records is relatively ineffective. Advantageously, in an example scenario, a calendar event is presented when the current time matches the calendar event reminder time, even when the reminder time is sooner than a time at which the device automatically turns on.

Another advantage of the present disclosure is that a record in a data-store can be presented such that the presentation of the record is more likely to be noticeable. Advantageously, in an example scenario, when a calendar event is before a scheduled alarm the alarm time is automatically changed so that it is sooner than the calendar event time. By presenting the alarm before or at the same time as the calendar event, it is more likely that the presentation of the calendar event will be noticed.

While the foregoing provides certain non-limiting example embodiments, it should be understood that combinations, subsets, and variations of the foregoing are contemplated.

## Claims

1. An electronic device comprising:
an input device;
an output device;
a memory; and
a processor coupled with the input device, the output device and the memory, the processor being configured to
identify a current time;
receive a command to switch the electronic device from a first operating mode to a second operating mode, wherein the electronic device consumes less power in the second operating mode than in the first operating mode;
identify a record in a data-store, the record storing a first time identifier;
identify a second time identifier;
automatically change the second time identifier to be sooner than or equal to the first time identifier; and
automatically switch the electronic device from the second operating mode to the first operating mode when the current time matches the second time identifier and present the record via the output device when the current time matches the first time identifier.

2. The electronic device of claim 1, wherein the memory is capable of storing an alert and the second time identifier is associated with the alert.

3. The electronic device of claim 2, wherein the alert comprises a plurality of instances; and wherein the processor is further configured to automatically change one of the plurality of instances of the second time identifier to be sooner than or equal to the first time identifier.

4. The electronic device of claim 2, wherein the alert comprises at least one of a visual alert, an audio alert and a tactile alert.

5. The electronic device of claim 1, wherein the processor is further configured to generate a prompt requesting confirmation for the changing of the second time identifier.

6. The electronic device of claim 1, wherein the command to switch the electronic device from the first operating mode to the second operating mode is received via the input device.

7. The electronic device of claim 1, wherein the command to switch the electronic device from the first operating mode to the second operating mode is stored in the memory and the processor is configured to automatically trigger the command.

8. The electronic device of claim 1, wherein the second operating mode comprises at least one of a standby mode, a hibernate mode and a mode wherein the electronic device is at least partially powered off.

9. The electronic device of claim 1, wherein the record in the data-store has a notification associated therewith and the notification is presented via the output device when the current time matches the first time identifier.

10. A method comprising:
identifying a current time;
receiving a command to switch an electronic device from a first operating mode to a second operating mode, wherein the electronic device consumes less power in the second operating mode than in the first operating mode;
identifying a record in a data-store of the electronic device, the record storing a first time identifier;
identifying a second time identifier stored in the data-store;
automatically changing the second time identifier to be sooner than or equal to the first time identifier; and
automatically switching the electronic device from the second operating mode to the first operating mode when the current time matches the second time identifier and presenting the record via an output device of the electronic device when the current time matches the first time identifier.

11. The method of claim 10, wherein the second time identifier is associated with an alert stored in a memory of the electronic device, the alert comprising at least one of a visual alert, an audio alert and a tactile alert.

12. The method of claim 11, wherein the alert comprises a plurality of instances; and wherein the changing comprises automatically changing one of the plurality of instances of the second time identifier to be sooner than or equal to the first time identifier.

13. The method of claim 10, further comprising generating a prompt requesting confirmation for the changing of the second time identifier.

14. The method of claim 10, wherein the command to switch the electronic device from the first operating mode to the second operating mode is received via an input device of the electronic device.

15. The method of claim 10, wherein the command to switch the electronic device from the first operating mode to the second operating mode is stored in the memory, the method further comprising a processor of the electronic device automatically triggering the command.

16. The method of claim 10, wherein the electronic device is automatically switched from the second operating mode to the first operating mode when the current time is equal to the second time identifier.

17. The method of claim 10, wherein the electronic device is automatically switched from the second operating mode to the first operating mode when a difference between the current time and the second time identifier is within a predetermined threshold.

18. The method of claim 10, wherein the second operating mode comprises at least one of a standby mode, a hibernate mode and a mode wherein the electronic device is at least partially powered off.

19. The method of claim 10, wherein the record in the data-store has a notification associated therewith, the method further comprising presenting the notification via the output device when the electronic device is switched to the first operating mode.

20. A non-transitory computer readable medium for causing an electronic device to perform steps comprising:
identifying a current time;
receiving a command to switch the electronic device from a first operating mode to a second operating mode, wherein the electronic device consumes less power in the second operating mode than in the first operating mode;
identifying a record in a data-store associated with the electronic device, the record storing a first time identifier;
identifying a second time identifier stored in the data-store;
automatically changing the second time identifier to be sooner than or equal to the first time identifier; and
automatically switching the electronic device from the second operating mode to the first operating mode and presenting the record via an output device of the electronic device when the current time matches the first time identifier.
